## Europäisches Patentamt
## European Patent Office
## Office européen des brevets

(11) Numéro de publication: **0 136 934**
**B1**

(12) # FASCICULE DE BREVET EUROPEEN

(45) Date de publication du fascicule du brevet:
**07.10.87**

(51) Int. Cl.⁴: **C 03 B 29/00**

(21) Numéro de dépôt: **84401712.9**

(22) Date de dépôt: **24.08.84**

(54) **Procédé de polissage de la surface d'articles en verre.**

(30) Priorité: **06.09.83 FR 8314181**

(43) Date de publication de la demande:
**10.04.85 Bulletin 85/15**

(45) Mention de la délivrance du brevet:
**07.10.87 Bulletin 87/41**

(84) Etats contractants désignés:
**AT BE CH DE FR GB IT LI LU NL SE**

(56) Documents cités:
**WO - A - 82/00635**
**DE - C - 395 450**
**FR - A - 2 037 541**
**US - A - 3 188 190**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cedex 07 (FR)**

(72) Inventeur: **Moufflet, Luc, 42, rue Mary Besseyre, F-92170 Vanves (FR)**
Inventeur: **Roux, Michel, 4, Place de la Mairie, F-92430 Marnes la Coquette (FR)**
Inventeur: **Valadier, Jean, 90 bis, Avenue du Docteur Calmette, F-91170 Viry Chatillon (FR)**

(74) Mandataire: **Leclercq, Maurice et al, L'AIR LIQUIDE SOCIETE ANONYME POUR L'ETUDE ET L'EXPLOITATION DES PROCEDES GEORGES CLAUDE 75, Quai d'Orsay, F-75321 Paris Cedex 07 (FR)**

## Déscription

La présente invention concerne un procédé de polisage de la surface d'articles en verre.

Après fabrication, les articles en verre présentent des défauts de surface qui sont de deux sortes:
– des défauts inhérents à la fabrication, dits défauts à l'échelle macroscopique, tels que marques de joints de moules, arêtes vives à adoucir, marques accidentelles telles que coups d'outils, etc...
– des défauts, dits à l'échelle microscopique, tels que rugosité, microfissures, etc..., défauts qui nuisent à l'esthétique de l'article en verre obtenu (éclat, transparence, etc...) et à ses caractéristiques mécaniques (tenue en pression,...).

La technique employée en verrerie pour éliminer ces défauts est le polissage qui permet d'améliorer l'état de surface de l'article en faisant disparaître les inégalités et les défauts.

Parmi les procédés industriels de polissage d'articles en verre utilisés jusqu'à present, on peut citer le polissage mécanique et le polissage chimique. Le polissage mécanique s'effectue par passages successifs de l'article en verre sur des meules abrasives de plus en plus fines. Ce procédé permet d'obtenir des articles de qualité, mais par contre, est d'un coût éléve. De plus, il ne peut être utilisé pour des articles présentant une géométrie particulière tels que les flacons fabriqués pour la parfumerie de luxe, les articles de cristallerie, etc... Le polissage chimique consiste à immerger l'article en verre dans un bain d'acide, le plus souvent d'acide fluorhydrique; cette immersion dans un bain d'acide entraîne la destruction superficielle du réseau support siliceux et l'élimination des cations, en particulier des cations alcalins. Ce traîtement ne revient toutefois qu'à un décapage violent et n'est pas applicable à tous les types de verre. En outre, il pose de nombreux problèmes de mise en œuvre et d'environnement compte tenu des réactifs chimiques employés.

Depuis quelque temps, quelques essais pour polir les articles en verre à l'aide d'une flamme oxygène-hydrocarbure, en particulier oxygène-gaz naturel, ont été tentés, ainsi qu'il est décrit notamment dans le brevet US-3 188 190. Selon ces essais on fait défiler l'article en verre devant la flamme oxygène-hydrocarbure; cèci provoque une refusion superficielle et le colmatage des fissures. Théoriquement, ce polissage à la flamme aurait dû permettre d'obtenir une bonne qualité de surface du fait que toutes les liaisons ont le temps de s'harmoniser à haute température. Malheureusement, lors de ces essais, on assiste à un effondrement de l'article avant d'atteindre une qualité de surface suffisante, du fait de l'échauffement à cœur trop important. Les essais de ce type n'ont pu en fait réussir qu'avec des articles en verre du très forte épaisseur.

L'invention a donc pour but de fournir un procédé de polissage d'articles en verre à l'aide d'une flamme qui permet d'obtenir une qualité de surface parfaite quelles que soient l'épaisseur et la configuration de l'article traité tout en évitant tout effondrement prématuré de l'article en question.

A cet effet ce procédé de polissage de la surface d'un article en verre, dans lequel on soumet la surface dudit article à une flamme d'oxygène et d'un combustible est caractérisé en ce que la dite flamme est telle que la fraction de l'énergie thermique totale transmise par rayonnement soit au plus égale à 25% et la valeur de

$$\frac{h}{Re^{0,5}}$$

soit au moins égale à 32 W/m$^2$ K, h étant le coefficient d'échange par convection et Re le nombre de Reynolds. En effet la fraction Ecv de l'énergie totale d'une flamme qui est transmise par convection, est proportionnelle, entre autres, au facteur

$$\frac{h}{Re^{0,5}}$$

Selon une autre caractéristique de l'invention la flamme utilisée contient des ions OH- et de préférence, à la stoëchiométrie, le nombre d'ions OH- par thermie d'énergie apportée est supérieur à 1,5 mole.

Selon une autre caractéristique de l'invention, la flamme utilisée est oxydante.

De préférence, selon l'invention, la flamme utilisée est une flamme d'oxygène et d'hydrogène.

Compte tenu du problème posé, le demandeur a recherché les moyens pour que la température $T_1$ obtenue à la surface de l'article soit grande tout en maintenant la température à cœur de l'article $T_2$ à une valeur faible, c'est-à-dire les moyens pour obtenir une différence de température $\Delta T$ entre $T_2$ et $T_1$ la plus grande possible. Les études du demandeur l'ont amené à faire les obervations suivantes: dans le cas dur verre, le transfert de la chaleur par rayonnement, du fait que ce dernier est un milieu semitransparent, se fait dans l'épaisseur du verre; par contre, le transfert de la chaleur par convection n'intervient qu'en surface. C'est pourquoi, le demandeur a mis au point une flamme telle que le transfert de chaleur par convection soit nettement supérieur au transfert de chaleur par rayonnement.

Par ailleur le demandeur s'est attaché à étudier d'autres paramètres qui interviennent de façon importante dans le processus de polissage, à savoir la tension superficielle et la viscosité du verre.

En ce qui concerne la tension superficielle, si l'on définit la couche superficielle de l'article en verre comme ayant une tension superficielle $\sigma 1$ et une température $T_1$ et la sous-couche à cœur dudit article comme ayant une tension superficielle $\sigma 2$ et une température $T_2$ (qui est inférieure à $T_1$), il faut, pour obtenir un bon polissage, que la couche en surface s'étale sur la couche plus profonde, c'est-à-dire qu'il faut augmenter la différence de tension superficielle $\Delta \sigma$ entre la couche en surface et la couche profonde. Les recherches du demandeur l'ont amené à observer que pour augmenter $\Delta\sigma$ il fallait d'une part augmenter la différence de température entre les deux couches, soit augmenter $\Delta T$, d'autre part diminuer $\sigma 1$ (puisque l'on peut ne peut intervenir sur la valeur de $\sigma 2$); et que pour diminuer la valeur de $\sigma 1$, il fallait augmenter la température $T_1$ de la couche en surface, augmenter la concentration en ions $OH^-$ de l'atmosphère environnante et avoir une atmosphère environnante oxydante. C'est pourquoi, compte tenu de ces observations, le demandeur a mis au point une flamme qui, comme on l'a dit plus haut, privilégie le transfert de chaleur par convection par rapport au transfert de chaleur par rayonnement, et qui, de plus, contient, de préférence, des ions $OH^-$ et est oxydante.

En ce qui concerne la viscosité du verre, pour obtenir un bon polissage, il est nécessaire de diminuer la viscosité $\eta 1$ de la couche en surface, c'est-à-dire augmenter la température $T_1$ de ladite couche. D'autre part, il faut veiller à ce que la température $T_2$ à cœur ne dépasse pas la valeur à laquelle la viscosité du verre est telle qu'il se produise un ramollissement du produit. Il faut donc, dans cette optique là également, utiliser une flamme telle que la différence de température $\Delta T$ entre la couche externe et la couche à cœur soit la plus grande possible.

Selon un mode de réalisation préféré de l'invention, on polit l'article en verre à l'aide d'une flamme d'oxygène et d'hydrogène. En effet, la flamme oxygène-hydrogène remplit bien les caractéristiques nécessaires découvertes par le demandeur pour obtenir un polissage satisfaisant sans effondrement de l'article traité.

A titre d'exemple comparatif, on signale que:
— à partir d'une même énergie apportée par la flamme, la puissance thermique $P_{CV}$ transmise par transfert convectif à l'aide d'une flamme oxygène-hydrogène est, par rapport à celle d'une flamme oxygène-gaz naturel et par rapport à une flamme oxygène-propane:
$$P_{CV}(H_2) = 1,65\, P_{CV}(GN) = 2,53\, P_{CV}(C_3H_8)$$
— à partir d'une même énergie apportée par la flamme, la puissance thermique Pr transmise par transfert rayonnant, à l'aide d'une flamme oxygène-hydrogène est, par rapport à une flamme oxygène-gaz naturel et par rapport à une flamme oxygène-propane:
$$Pr(H_2) = 0,3\,Pr(GN) = 0,24\, Pr(C_3H_8)$$
Comme on le voit, la flamme oxygène-hydrogène, utilisée de préférence conformément à l'invention, permet d'obtenir un rapport entre transfert par convection et transfert par rayonnement beaucoup plus grand que les flammes oxygène-hydrocarbure.

D'autre part, toujours à titre comparatif, la quantité d'ions $OH^-$ contenue dans une flamme oxygène-hydrogène est supérieure de 15 à 25% à celle d'une flamme oxygène-gaz naturel et elle est supérieure de 40 à 60% à celle d'une flamme oxygène-propane, cela pour un excès de comburant de 5 à 30%. On voit donc que la flamme oxygène-hydrogène, utilisée de préférence conformément à l'invention, entraîne une diminution plus forte de la tension superficielle 1 de la couche en surface que les deux autres flammes oxygène-hydrocarbure.

De plus, on peut régler sans difficultés le caractère oxydant d'une flamme oxygène-hydrogène. En effet, du fait que l'on amène séparément l'oxygène et l'hydrogène pour ne pas avoir risque d'explosion lors d'un retour de flamme, lorsqu'on ajoute un excès d'oxygène (entre 5 et 50% et de préférence 20%), du fait que l'hydrogène est un gaz qui se mélange très vite et a une vitesse de déflagration nettement plus importante que d'autres combustibles tels que les hydrocarbures, on obtient une flamme dans laquelle le mélange est homogène très rapidement et l'excès d'oxygène reste stable. Or, toujours à titre comparatif, cette stabilité ne pourrait être obtenue avec une flamme oxygène-hydrocarbure.

Ainsi, on voit que l'utilisation, pour le polissage d'articles en verre, d'une flamme ayant les caractéristiques définies ci-dessus, et notamment d'une flamme oxygène-hydrogène, permet de résoudre un problème pour lequel les quelques essais effectués avec des flammes oxygène-hydrocarbure s'étaient révélés infructueux.

**Revendications**

1. Procédé de polissage de la surface d'un article en verre, dans lequel on soumet la surface dudit article à une flamme d'oxygène et de combustible, caractérisé en ce que ladite flamme est telle que la fraction de l'énergie thermique totale transmise par rayonnement est au plus égale à 25% et en ce que la valeur de
$$\frac{h}{Re^{0,5}}$$
est au moins égale à 32 W/m²K, h étant le coefficient d'échange par convection et Re le nombre de Reynolds.

2. Procédé suivant la revendication 1, caractérisé en ce que la flamme utilisée contient des ions $OH^-$.

3. Procédé suivant la revendication 2, caractérisé en ce qu'à la stœchiométrie, le nombre d'ions $OH^-$ par thermie d'énergie apportée est supérieur à 1,5 mole.

4. Procédé suivant l'une quelconque des revendications précédentes caractérisé en ce que la flamme est oxydante.

5. Procédé selon l'une quelconque des revendications précédentes caractérisé en ce que la flamme est constituée par une flamme d'oxygène et d'hydrogène.

6. Procédé suivant la revendication 5, caractérisé en ce que ladite flamme comporte un excès d'oxygène compris entre 5% et 50%.

**Patentansprüche**

1. Verfahren zum Polieren der Oberfläche eines Glasgegenstandes, bei dem man die Oberfläche dieses Gegenstandes einer Sauerstoff- und Brennstoffflamme aussetzt, dadurch gekennzeichnet, dass die Flamme derart ist, dass der durch Strahlung übertragene Anteil der gesamten thermischen Energie grösser als 25% ist und dass der Wert von

$$\frac{h}{Re^{0,5}}$$

kleiner als 32 W/m²K ist, wobei h der Koeffizient für den Austausch durch Konvektion und Re die Reynold'sche Zahl ist.

2. Verfahren nach Anspruch 1, dadurch gekennzeichnet, dass die benutzte Flamme OH⁻-Ionen enthält.

3. Verfahren nach Anspruch 2, dadurch gekennzeichnet, dass stöchiometrisch die Anzahl der OH⁻-Ionen, die durch 1000 kcal Energie angeliefert wird, grösser als 1,5 Mol ist.

4. Verfahren nach einem der vorausgehenden Ansprüche, dadurch gekennzeichnet, dass die Flamme oxidierend ist.

5. Verfahren nach einem der vorausgehenden Ansprüche, dadurch gekennzeichnet, dass die Flamme aus einer Sauerstoff- und Wasserstoffflamme besteht.

6. Verfahren nach Anspruch 5, dadurch gekennzeichnet, dass die Flamme einen Sauerstoffüberschuss zwischen 5% und 50% aufweist.

## Claims

1. Process for polishing the surface of a glass article in which the surface of said article is subjected to an oxygen and combustible flame, characterized in that the said flame is such that the portion of the total thermal energy transmitted by radiation is more than 25% and that the value of

$$\frac{h}{Re^{0,5}}$$

is less than 32 Wm²/K, h being the coefficient of exchange by convection and Re is the Reynold-number.

2. Process according to claim 1, characterized in that the used flame contains OH⁻ions.

3. Process according to claim 2, characterized in that stoichiometrically the presented number of OH⁻ions per 1000 kcal of energy is more than 1.5 mole.

4. Process according to one of the preceeding claims, characterized in that the flame is oxidizing.

5. Process according to one of the preceeding claims, characterized in that the flame consists of an oxygen and hydrogen flame.

6. Process according to claim 5, characterized in that the flame comprises an excess of oxygen between 5% and 50%.